Europäisches Patentamt

European Patent Office

Office européen des brevets

(19)

(11) Veröffentlichungsnummer: **0 213 370 B1**

# (12) EUROPÄISCHE PATENTSCHRIFT

(45) Veröffentlichungstag der Patentschrift: 31.07.91

(51) Int. Cl.⁵: **A01C 17/00**

(21) Anmeldenummer: **86110162.4**

(22) Anmeldetag: **23.07.86**

(54) Verfahren zum Verteilen von Düngemitteln und Schleuderstreuer zur Durchführung des Verfahrens.

(30) Priorität: **23.07.85 DE 3526355**
**23.11.85 DE 3541439**

(43) Veröffentlichungstag der Anmeldung:
**11.03.87 Patentblatt 87/11**

(45) Bekanntmachung des Hinweises auf die
Patenterteilung:
**31.07.91 Patentblatt 91/31**

(84) Benannte Vertragsstaaten:
**AT BE CH DE FR GB IT LI LU NL SE**

(56) Entgegenhaltungen:
**EP-A- 0 127 922**
**DE-A- 2 949 224**

(73) Patentinhaber: **Amazonen-Werke H. Dreyer**
**GmbH & Co. KG**
**Postfach 51**
**W-4507 Hasbergen-Gaste(DE)**

(72) Erfinder: **Dreyer, Heinz, Dr. Dipl.-Ing.**
**Am Amazonenwerk 7**
**W-4507 Hasbergen(DE)**

(74) Vertreter: **Patentanwälte Grünecker, Kinkel-**
**dey, Stockmair & Partner**
**Maximilianstrasse 58**
**W-8000 München 22(DE)**

EP 0 213 370 B1

## Beschreibung

Die Erfindung betrifft ein Verfahren und einen Schleuderstreuer zum Verteilen von Düngemitteln nach dem Oberbegriff des Anspruchs 1 bzw. des Anspruchs 3.

Ein derartiges Verfahren sowie ein nach diesem Verfahren arbeitender Schleuderstreuer ist aus der DE-OS 29 49 224 bekannt. Bei diesem Schleuderstreuer kann der äußere Abwurfteil jedes Wurfelementes in aufrechter Ebene verschwenkt werden, um die Düngemittelpartikel mit unterschiedlichen Abwurfwinkeln, gemessen gegenüber der Horizontalen, abzuschleudern. Dadurch ist der Schleuderstreuer sowohl für die Normaldüngung, bei der der Abwurfwinkel relativ klein ist, als auch für die Verteilung des Düngemittels über höher aufgewachsener Pflanzen, d.h. für die sogenannte Spätdüngung, mit einem größeren Abwurfwinkel im Vergleich zur Normaldüngung geeignet. Infolge dieser Maßnahmen kann die Wurfweite der Düngemittelpartikel und damit die effektive Streubreite des Schleuderstreuers verändert werden.

Aus der EP-A-0172 922 ist es bekannt, seitlich an einer Streuscheibe am Streugerät feststehende Bremsplatten anzuordnen, die bei einer dort beschriebenen Variante den Partikelstrom zunächst nach oben und dann gegenüber der nach oben gerichteten Richtung wieder nach unten umlenken, um so die Wurfweite zu verringern.

Um ein gleichmäßiges Streubild auch unter schwierigen Bedingungen, auch z.B. beim Grenzstreuen im Zusammenhang mit einer Spätdüngung zu erzielen, schlägt die Erfindung die in den kennzeichnenden Teilen der Ansprüche 1 und 3 angegebenen Merkmale vor.

Beim Grenzstreuen bei Spätdüngung werden durch das Ablenken des gesamten Düngemittelstroms nach oben und anschließend zumindest teilweise nach unten praktisch alle diejenigen Düngemittelpartikel, die beim Grenzstreuen, für Dormaldüngung, unter bestimmten Einsatzbedingungen mit noch einem zu großen Abwurfwinkel bis über den Feldrand hinaus geschleudert würden, nunmehr ebenfalls nach unten abgelenkt und zusammen mit den mit gewünschtem Abwurfwinkel abgeschleuderten Düngemittelpartikeln innerhalb der bis zum Feldrand reichenden Fläche auf den Boden aufgebracht. Gleichzeitig erfährt der Düngemittelstrom durch das zweimalige Ablenken eine intensive Durchmischung, die ebenfalls den Streubereich des Abwurfwinkels verringert. Darüber hinaus wird durch das Ablenken des Gesamt-Düngemittelstroms nach oben und das Ablenken zumindest eines Teils desselben nach unten, d.h. durch die bei diesen beiden Ablenkvorgängen auftretenden Zentrifugalkräfte, eine zweimalige Verdichtung des Düngemittelstroms und eine daraus resultierende nochmalige Verringerung der Streuung der abgeworfenen Düngemittelpartikel hinsichtlich ihres Abwurfwinkels erzielt.

Der Vergleichmäßigungseffekt infolge deer erfindungsgemäßen Maßnahmen kann durch Verlängerung der oberen Leitfläche derart, daß sie über die untere Leitfläche nach außen vorsteht, verstärkt werden. In die gleiche Richtung zielt die Ausbildung des Wurfelementes mit einer zur unteren Führungsfläche im wesentlichen parallelen oberen Führungsfläche.

Gemäß einer Weiterbildung der Erfindung kann zur Umstellung des erfindungsgemäßen Schleuderstreuers auf andere Düngungs- und Streuarten das Wurfelement lösbar und gegen andere, entsprechend ausgebildete Wurfelemente austauschbar am Schleuderstreuer befestigt sein. Bei Ausbildung der Streueinrichtung als wenigstens eine drehbare Schleuderscheibe mit darauf angeordnetem Wurfelement und lösbarer und austauschbarer Befestigung dieser Schleuderscheibe am Schleuderstreuer kann der Austausch des Wurfelementes in einfacher Weise durchgeführt werden.

Natürlich ist es auch möglich und bei Schleuderstreuern mit schwieriger und zeitaufwendig auszutauschender Schleuderscheibe vorteilhaft, jedes Wurfelement lösbar und austauschbar, beispielsweise mit Schnellverschlüssen oder anderen leicht lösbaren Verbindungen, an der Schleuderscheibe zu befestigen.

Um den Schleuderstreuer mit größtmöglicher Sicherheit wiederholbar in gleicher Weise auf die verschiedenen Düngungs- und Streuarten einstellen zu können, ist es vorteilhaft, wenn jedes Wurfelement mit seinem inneren Führungsteil und seinem äußeren Abwurfteil insgesamt einstückig ausgebildet ist.

Natürlich ist es auch möglich, den inneren Führungsteil und den äußeren Abwurfteil jedes Wurfelementes als zwei individuelle Bauteile auszubilden. Dies macht es möglich, daß gemäß einer Weiterbildung der Erfindung die untere Leitfläche und/oder die obere Leitfläche unabhängig voneinander in unterschiedliche Winkelstellungen gegenüber dem inneren Führungsteil verstellbar sind. Dadurch sind Feinanpassungen des Wurfelementes bei Einstellung auf eine bestimmte Düngungsund/oder Streuungsart möglich, die beispielsweise unterschiedlichen Windverhältnissen Rechnung tragen. Ferner ist es damit möglich, sowohl beim Grenzstreuen als auch beim Normalstreuen unterschiedliche effektive Streubreiten zu erzielen.

Ist jedoch nur die untere oder die obere Leitfläche verstellbar ausgebildet, so ergibt sich ein zwar weniger fein einstellbares, jedoch konstruktiv einfacheres und auch durch weniger geschulte Kräfte mit größter Sicherheit einstellbares Wurfelement.

Dabei kann gemäß einer Weiterbildung der Erfindung die untere Leitfläche des äußeren Abwurfteils und der innere Führungsteil als einteiliges Bauelement ausgebildet und die obere Leitfläche in unterschiedliche Winkelstellungen gegenüber der unteren Leitfläche verstellbar sein. Zur Durchführung der Normal- und der Spätdüngung und des Grenzstreuens bei beiden Düngungsarten sind bei einem derart ausgebildeten Wurfelement lediglich die obere verstellbare Leitfläche sowie ein erstes inneres Führungsteil mit unterer Leitfläche für die Normaldüngung und ein zweites inneres Führungsteil mit einer unteren Leitfläche für die Spätdüngung erforderlich. Zur Umstellung eines derartigen Wurfelementes von beispielsweise der Spätdüngung auf die Spätdüngung mit Grenzstreuen wird lediglich die obere Leitfläche nach unten verschwenkt, bis sie im Winkel zur unteren Führungsfläche nach unten weisend angeordnet ist. Soll der Schleuderstreuer von der Normal- auf die Spätdüngung umgestellt werden, so ist bei einem derartigen Wurfelement lediglich erforderlich, den inneren Führungsteil mit der daran einteilig ausgebildeten unteren Leitfläche auszutauschen. Dieser Austausch ist besonders dann leicht durchzuführen, wenn gemäß einer Weiterbildung der Erfindung die obere verstellbare Leitfläche verstellbar an der Schleuderscheibe befestigt ist.

Vorteilhafterweise sind Rasten oder Anschläge zur Festlegung der unteren Leitfläche und/oder der oberen Leitfläche in verschiedenen Winkelstellungen vorgesehen, um die Einstellsicherheit des Wurfelementes zu vergrößern.

In einer bevorzugten Ausführungsform ist vorgesehen, daß die Streueinrichtung zumindest ein längeres und ein kürzeres Wurfelement umfaßt und die untere und/oder obere Leitfläche des längeren Wurfelementes bzw. dessen Abwurfteil insgesamt verstellbar bzw. austauschbar ausgebildet sind bzw. ist. Damit wird erreicht, daß nur das längere Wurfelement, nicht jedoch das kürzere verstellt werden muß. Dadurch kann erreicht werden, daß bei Umstellung des längeren Wurfelementes von Normal- auf Spätdüngung die Wurfparabel verkürzt und die Düngemittelpartikel von diesem längeren Wurfelement etwa so weit abgeworfen werden, wie die Düngemittelpartikel vom kürzeren Wurfelement.

Vorzugsweise sind wenigstens zwei Streueinrichtungen vorgesehen und die diesen jeweils zuzuführende Düngemittelmenge unabhängig voneinander veränderbar. Dadurch ist es möglich, unterschiedliche breite Feldrandstreifen, vor allem wenn die letzte Streubahn gestreut wird, die schmaler bzw. breiter als die normale effektive Streubreite ist und nicht mit den Breiten des Fahrgassensystems übereinstimmt, den Schleuderstreuer an diesen letzten unterschiedlich breiten Streustreifen anzupassen.

Weitere Einzelheiten der Erfindung ergeben sich aus den verbleibenden Unteransprüchen. Nachstehend ist die Erfindung anhand einiger Ausführungsbeispiele unter Bezugnahme auf die Zeichnung näher beschrieben. Es zeigen:

Fig.1 eine Rückansicht eines erfindungsgemäßen Schleuderstreuers mit einem von der Streueinrichtung für Normaldüngung erzeugten Streubild in Prinzipdarstellung,

Fig.2 eine Rückansicht des Schleuderstreuers nach Fig.1 mit einem von der Streueinrichtung für Spätdüngung erzeugten Streubild in Prinzipdarstellung,

Fig.3 eine Rückansicht des Schleuderstreuers nach Fig.1 mit einem von der Streueinrichtung für das Feldrandbestreuen bei Normaldüngung erzeugten Grenzstreubild in Prinzipdarstellung,

Fig.4 eine Rückansicht des Schleuderstreuers nach Fig.1 mit einem von der Streueinrichtung für das Feldrandbestreuen gemäß dem erfindungsgemäßen Verfahren erzeugten Grenzstreubild bei Spätdüngung in Prinzipdarstellung,

Fig.5 eine Seitenansicht eines verstellbaren Wurfelementes der Streueinrichtung nach den Figuren 1 bis 4, das zur Durchführung des erfindungsgemäßen Feldrandbestreuens bei Spätdüngung eingestellt ist,

Fig.6 eine Seitenansicht des Wurfelementes nach Fig.5 mit Einstellung auf Normaldüngung,

Fig.7 eine Seitenansicht des Wurfelementes nach Fig.5 mit Einstellung auf Spätdüngung,

Fig.8 eine Seitenansicht des Wurfelementes nach Fig.5 mit Einstellung auf das Feldrandbestreuen bei Normaldüngung,

Fig.9 eine Seitenansicht eines nicht-verstellbaren Wurfelementes, das zur Durchführung des erfindungsgemäßen Feldrandbestreuens bei Spätdüngung ausgebildet ist,

Fig.10 eine Seitenansicht eines weiteren, nichtverstellbaren Wurfelementes für Normaldüngung,

Fig.11 eine Seitenansicht eines weiteren nicht-verstellbaren Wurfelementes für Spätdüngung,

Fig.12 ein weiteres nicht-verstellbares Wurfelement für das Feldrandbestreuen bei Normaldüngung,

Fig.13 eine Seitenansicht eines teil-verstellbaren Wurfelementes gemäß einem ersten Ausführungsbeispiel, das zur Durchführung des erfindungsgemäßen Verfahrens, d.h., zum Feldrand-bestreuen bei Spätdüngung, einge-stellt ist,

Fig.14 eine Seitenansicht des Wurfelementes nach Fig.13 mit Einstellung auf Spätdüngung,

Fig.15 eine Seitenansicht eines teil-verstellbaren Wurfelementes gemäß einem zweiten Ausführungsbeispiel, das zur Durchführung der Normaldüngung eingestellt ist,

Fig.16 eine Seitenansicht des Wurfelementes nach Fig.15 mit Einstellung auf das Feldrandbestreuen bei Normaldüngung,

Fig.17 eine Seitenansicht eines teil-verstellbaren Wurfelementes gemäß einem dritten Ausführungsbeispiel, und

Fig.18 eine Seitenansicht eines teil-verstellbaren Wurfelementes gemäß einem vierten Ausführungsbeispiel.

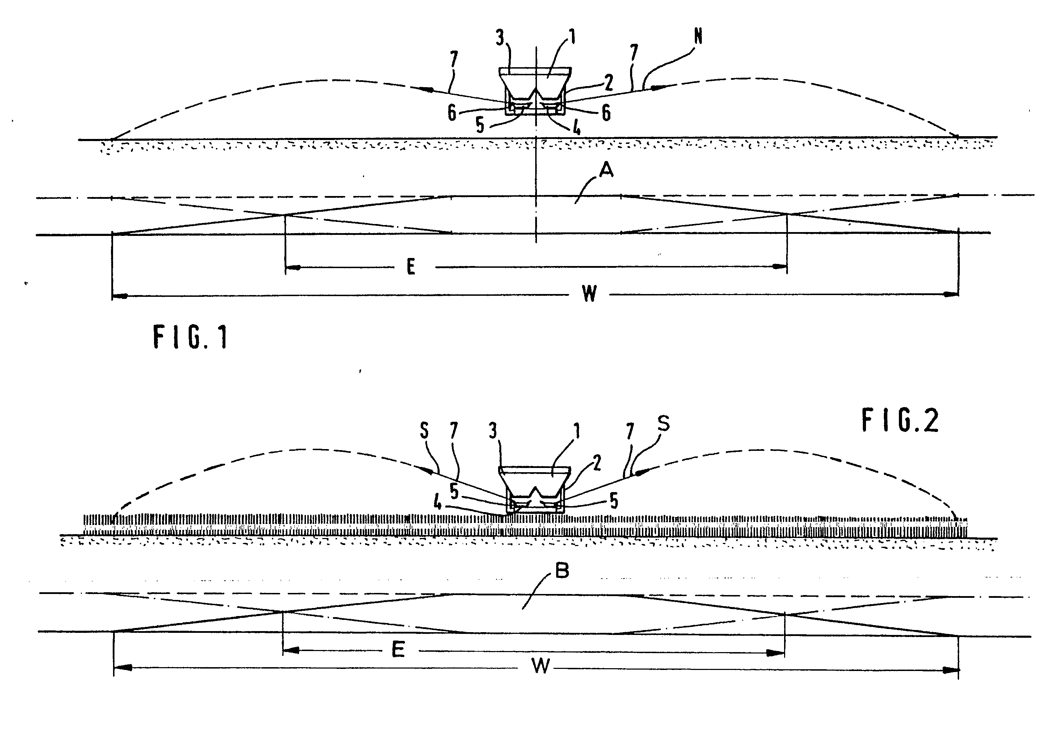

Der in den Figuren 1 bis 4 dargestellte Schleuderstreuer 1 ist mit einem Rahmen 2 und einem in seinem unteren Bereich geteilten Vorratsbehälter 3 ausgestattet, unter dem sich zwei nebeneinander angeordnete Streueinrichtungen 4 bestehend aus jeweils einer in der Horizontalen drehbar angeordneten Schleuderscheibe 5 mit darauf angebrachtem Wurfelement 6 befinden. Die im Querschnitt im wesentlichen U-förmigen Wurfelemente erstrecken sich auf den Schleuderscheiben 5 radial nach außen. Sie bestehen jeweils aus einem im wesentlichen vertikalen Steg 40, an den sich in Drehrichtung der jeweiligen Schleuderscheibe 5 vorlaufend angeordnet, die U-Schenkel anschließen. Jedes Wurfelement ist in zwei Abschnitte aufgeteilt, die als äußerer Abwurfteil 8 und als innerer Führungsteil 13 bezeichnet sind. Der äußere Abwurfteil 8 umfaßt den Bereich des freien, randäußeren Endes des Wurfelementes, an den sich radial nach innen der erheblich längere innere Führungsteil 13 anschließt. Entsprechend dieser Aufteilung des Wurfelementes sind auch dessen U-Schenkel, nicht jedoch der Steg 40, unterschiedlich bezeichnet, und zwar als untere und obere Führungsfläche 11 bzw. 12 im inneren Führungsteil 13 sowie als untere und obere Leitfläche 17 bzw. 18 im äußeren Abwurfteil 8 des Wurfelementes 6.

Das aus dem Vorratsbehälter 2 fallende und auf die rotierenden Schleuderscheiben 5 aufprallende Düngemittel wird in Form eines ungeordneten Düngemittelstroms entlang den Wurfelementen, genauer gesagt, entlang dem jeweiligen Steg 40, und unten sowie oben durch die unteren und oberen Führungsflächen bzw. Leitflächen 11,12,17,18 begrenzt, radial nach außen geführt und im Abwurfbereich über den äußeren Abwurfteil 8 in Richtung der Pfeile 7 unter einen vom Abwurfteil 8 bestimmten Abwurfwinkel in einem Halbkreis seitlich und nach hinten abgeschleudert, wobei die Düngemittelpartikel die mit gestrichelten Linien angedeuteten Wurfparabeln beschreiben.

Je nachdem, mit welchen Abwurfwinkeln die Düngemittelpartikel von den Schleuderscheiben 5 abgeschleudert werden, entstehen verschiedene Streubilder für verschiedene Einsatzzwecke.

In Fig.1 ist der Abwurfwinkel der Wurfelemente bzw. der äußeren Abwurfteile 8 so eingestellt, daß das für die Normaldüngung geeignete Streubild A von den in Streurichtung N abgeschleuderten Dün-gemittelpartikeln erzeugt wird. Die Düngemittelpar-tikel werden über die Wurfweite W mit flach abfallenden Flanken abgeschleudert. Durch Überlappen der nebeneinanderliegenden Streubahnen werden die Düngemittel in gleichmäßiger Streustärke mit einer effektiven Streubreite E auf dem Feld ausgebracht. Bei dem in Fig.2 dargestellten Schleuderstreuer werden die Düngemittelpartikel mit einem größeren Abwurfwinkel als bei der Normaldüngung in Streurichtung S abgeschleudert, so daß das Streubild B entsteht.

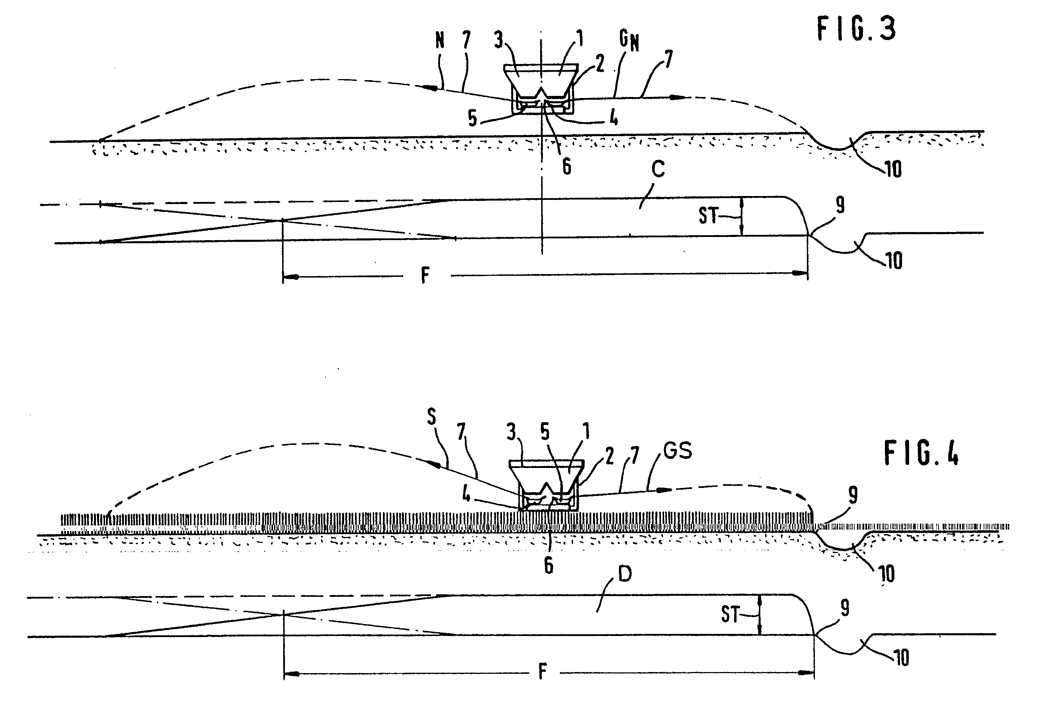

Bei den in den Figuren 3 und 4 gezeigten Einsatzfällen, bei denen mit dem Schleuderstreuer ein Feldrandstreifen so bestreut werden soll, daß die Düngemittelpartikel bis an den durch einen Graben 10 gebildeten Feldrand 9 mit gleichmäßiger Streustärke ST herangeworfen werden, sind die Wurfelemente 6 auf der dem Feldrand 9 nächstliegenden Schleuderscheibe 5 so eingestellt, daß die Düngemittelpartikel in eine Richtung abgeschleudert werden, die unterhalb der Normalstreurichtung N liegt. Hierdurch entstehen die Grenzstreubilder C und D mit der zum Feldrand steil abfallenden Streustärke. Dabei ist die effektive Streubreite F im Vergleich zur effektiven Streubreite E beim Normalstreuen um das der Verringerung der Wurfweite auf der dem Feldrand zugewandten Seite entsprechende Maß reduziert.

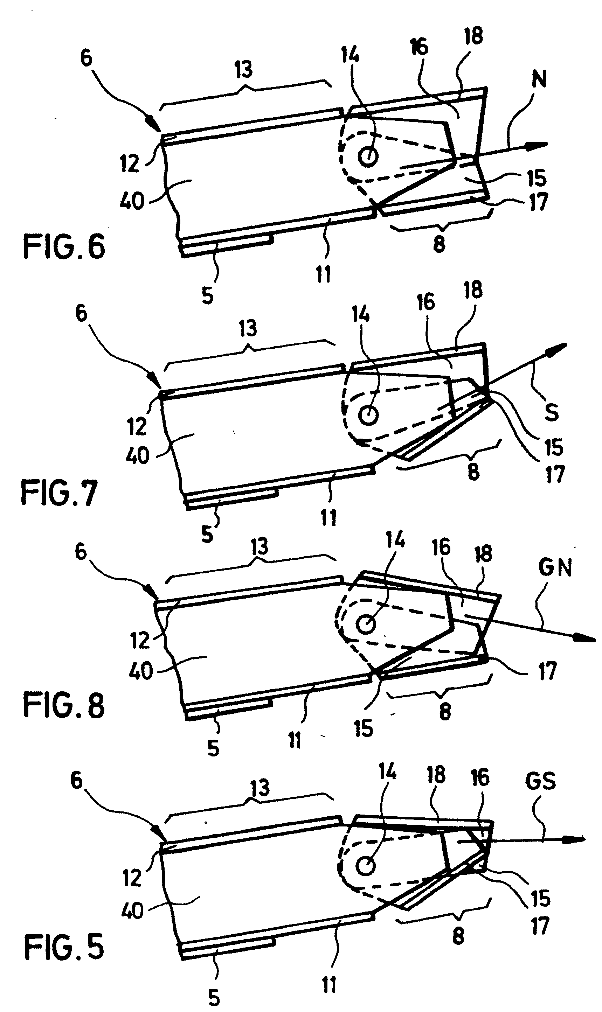

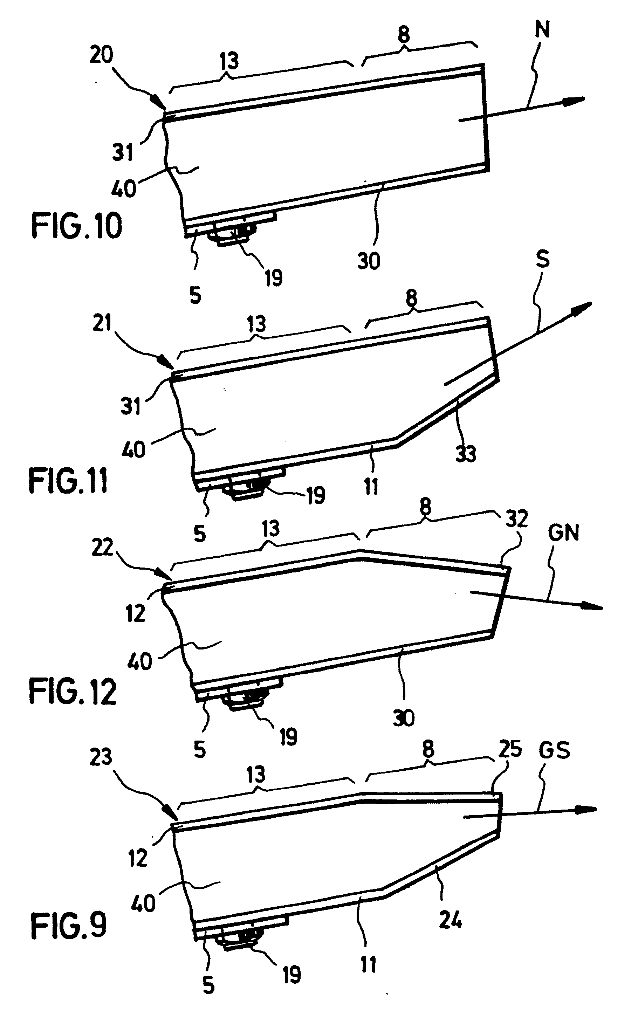

Bei den in den Figuren 5 bis 8 dargestellten Wurfelementen 6 sind der innere Führungsteil 13 und der äußere Abwurfteil 8 als zwei individuelle Bauteile ausgebildet. Der innere Führungsteil 13 ist fest an der Schleuderscheibe 5 angeschraubt. Sein Steg 40 ist um ein Teilstück länger als die Führungsflächen 11,12. Dieses Teilstück ist bis zu seinem freien Ende sich konisch verjüngend ausgebildet und an seinem gegenüberliegenden Ende mit einem Schwenkbolzen 14 versehen. Der äußere Abwurfteil 8 besteht aus einem unteren Stegteil 15, der die untere Leitfläche 17 trägt, und aus einem oberen Stegteil 16, der die obere Leitfläche 18 trägt. Beide Stegteile 15, 16 weisen je eine Bohrung auf, mit der sie auf den Schwenkbolzen 14 aufgeschoben und dadurch in aufrechter Ebene schwenkbar am inneren Führungsteil 13 angeordnet sind. Dabei schließen die Leitflächen 17, 18 nahezu unmittelbar an die Führungsflächen 11, 12 an. Der innere Führungsteil 13 und die Stegteile 15,16 sind über eine aus der DE-OS 29 49 224 bekannten reibschlüssen Verbindung miteinander verbunden, so daß sie allein mittels Handkraft in verschiedene festgelegte Stellungen einzustellen sind. Der innere Führungsteil 13 verläuft mit einer die Streurichtung N bei Normaldüngung bestimmenden Steigung gegenüber der Horizontalen. Dies trifft auch für die Wurfelemente nach den Fig.9-18 zu.

Das in Fig.6 dargestellte Wurfelement 6 ist für die Durchführung der Normaldüngung eingestellt. Die beiden Stegteile 15,16 sind soweit nach außen voneinander weggeschwenkt, bis sie mit ihren, dem inneren Führungsteil 13 zugewandten, konvex verlaufenden Kanten an die freien Enden der Führrungsflächen 11,12 anliegen und somit in einfacher Weise in der Normaldüngungsstellung festgelegt sind. In dieser Stellung fluchten die Leitflächen 17, 18 mit den zugeordneten Führungsflächen 11 bzw. 12, d.h.sie verlaufen mit dem gleichen Steigungswinkel zur Horizontalen wie die untere Führungsfläche 11, so daß der Düngemittelstrom in Richtung N (Normalstreurichtung) abgeschleudert wird und das in Figur 1 dargestellte Streubild A entsteht.

Um mit dem Schleuderstreuer die Spätdüngung gemäß Fig.2 durchführen zu können, wird der untere Stegteil 15 ausgehend von der in Fig.6 gezeigten Stellung nach oben in die in Fig.7 dargestellte Stellung verschwenkt, in der die untere Leitfläche 17 an dem sich konisch verjüngenden Teilstück des Steges 40 anliegt und somit in dieser Stellung festgelegt ist. Die obere Leitfläche 18 verbleibt in der zur unteren Führungsfläche 11 parallelen Stellung. Die Düngemittelpartikel werden mit einem durch die Steigung der unteren Leitfläche 17 bestimmten Abwurfwinkel in einer oberhalb der Normaldüngungsrichtung N liegenden Richtung S abgeschleudert.

Wenn der Schleuderstreuer für das Feldrandbestreuen für die Normaldüngung gemäß Fig.3 eingerichtet werden soll, wird bei dem nach Fig.6 auf Normaldüngung eingestellten Wurfelement 6 der obere Stegteil 16 nach unten in die in Fig.8 gezeigte Stellung verschwenkt, in welcher die obere Leitfläche 18 an dem sich verjüngenden Teilstück des Steges 40 anlegt und somit in dieser Stellung festgelegt ist. Die untere Leitfläche 17 verbleibt in der mit der unteren Führungsfläche 11 fluchtenden Stellung. Durch die nach unten in den Düngemittelstrom hineinragende obere Leitfläche 18 wird ein beträchtlicher Teil derjenigen Düngemittelpartikel, die von der unteren Führungsfläche 11 bzw. der mit dieser fluchtenden unteren Leitfläche 17 abprallend bei nicht nach unten weisender oberer Leitfläche 18 infolge der ungeordneten Bewegung der Düngemittelpartikel entlang dem Wurfelement mit einem zu großen Abwurfwinkel abgeschleudert würden, nunmehr durch die nach unten weisende obere Leitfläche 18 nach unten abgelenkt und gelangen somit nicht zum äußeren Randstreifen abnehmender Streustärke, so daß dieser Randstreifen in seiner Breite stark reduziert wird und das in Fig.3 gezeigte Streubild C steht.

Gemäß Fig.5 sind die Wurfelemente auf der dem Feldrand 9 nächstliegenden Schleuderscheibe 5 für das Grenzstreuen bei Spätdüngung eingestellt. Zu diesem Zweck sind beide Stegteile 15, 16 soweit aufeinander zu verschenkt, bis sie mit ihren Leitflächen 17, 18 an dem sich verjüngenden Teilstück des Steges 40 anliegen und dadurch in einfachster Weise genau festgelegt sind. Dabei sind die untere Leitfläche 17 im Winkel zur unteren Führungsfläche 11 nach oben und die obere Leitfläche 18 im Winkel zur unteren Führungsfläche 11 nach unten weisend angeordnet. Der sich entlang dem inneren Führungsteil 13 mit dem Steigungswinkel der unteren Führungsfläche 11 radial nach außen bewegende Düngemittelstrom trifft auf die mit einem größeren Steigungswinkel zur Horizontalen als die untere Führungsfläche 11 nach oben ragende untere Leitfläche 17 auf, wird durch diese nach oben abgelenkt und anschließend zumindest teilweise von der nach unten in den Düngemittelstrom hineinragenden oberen Leitfläche 18 wieder nach unten abgelenkt und mit einer unterhalb der Normalstreurichtung N liegenden Richtung als durchmischter, verdichteter und vergleichmäßigter Düngemittelstrom, bei dem sämtliche Düngemittelpartikel praktisch den gleichen Abwurfwinkel aufweisen, abgeschleudert, so daß das in Fig.4 gezeigte Grenzstreubild D mit gleichbleibender Streustärke bis zum Feldrand 9 entsteht. Dabei muß der Winkel, mit dem die untere Leitfläche 17 in den Düngemittelstrom hineinragt, nicht notwendigerweise der gleiche sein, den diese Leitfläche 17 bei der Spätdüngung gemäß Fig.7 einnimmt. Es ist gerade der Vorteil der individuell verstellbaren unteren und oberen Leitflächen 17, 18, die eine Feinanpassung des Wurfelementes bei Einstellung auf eine bestimmte Düngungs- und/oder Streuungsart ermöglichen, um beispielsweise unterschiedlichen Windverhältnissen Rechnung zu tragen oder beispielsweise die Größe des von der oberen Leitfläche 18 nach unten abgelenkten Teilstroms zu verändern.

Die in den Figuren 9 bis 12 dargestellten Wurfelemente 20 bis 23 sind mit ihrem jeweiligen inneren Führungsteil 13 und äußeren Abwurfteil 8 einteilig ausgebildet und mit einer Schraube 19 austauschbar am Wurfelement 5 befestigt. Das Verhalten des Düngemittelstroms bei seiner Bewegung entlang dem inneren Führungsteil 13 und dem äußeren Abwurfteil 8 ist prinzipiell das gleiche wie bei den entsprechenden Wurfelementen nach den Figuren 5 bis 8, so daß sich eine nochmalige Beschreibung an dieser Stelle erübrigt.

Das Wurfelement 20 gemäß Fig.10 ist für die Normaldüngung vorgesehen; dementsprechend verlaufen die untere Führungsfläche und die untere Leitfläche, insgesamt (als U-Schenkel des Wurfelementes) mit 30 bezeichnet, sowie die obere Führungsfläche und die obere Leitfläche, insgesamt (als U-Schenkel des Wurfelementes) mit 31 bezeichnet,einteilig in jeweils einer Ebene parallel zueinander. Der Steg 40 erstreckt sich, wie auch bei den nachfolgenden Wurfelementen 21 bis 23,ebenfalls einteilig über die Gesamtlänge des Wurfelementes.

Zur Umstellung des Schleuderstreuers auf Spätdüngung wird nach Lösen der Schraube 19 das Wurfelement 20 von der Schleuderscheibe 5 entfernt und gegen das in Fig.11 gezeigte Wurfelement 21 ausgetauscht, welches ebenfalls mit der Schraube 19 an der Schleuderscheibe 5 befestigt wird. Dieses Wurfelement 21 weist den gleichen oberen U-Schenkel 31 wie das Wurfelement 20 auf. Der untere U-Schenkel ist im Bereich des inneren Führungsteils 13 als untere Führungsfläche 11 und im äußeren Abwurfbereich 8 als untere Leitfläche 33 ausgebildet,die derart nach oben in den Düngemittelstrom hineinragend angeordnet, daß die Düngemittelpartikel in der Streurichtung S für Spätdüngung abgeschleudert werden.

Ist der Schleuderstreuer für das Bestreuen von Feldrandstreifen bei der Normaldüngung entsprechend Fig.3 vorgesehen, so werden auf der Schleuderscheibe 5 - bei einem Zweischeibenstreuer nur an der dem Feldrand 9 zugewandten Streueinrichtung 4 - die in Fig.12 dargestellten Wurfelemente 22 mit Hilfe der Schraube 19 montiert. Die Wurfelemente 22 weisen den gleichen unteren U-Schenkel 30 wie das Wurfelement 20 nach Fig.10 auf. Der obere U-Schenkel ist im Bereich des inneren Führungsteils 13 als obere Führungsfläche 12 und im äußeren Abwurfbereich 8 als obere Leitfläche 32 ausgebildet, die derart nach unten in den Düngemittelstrom hineinragt, daß die Düngemittelpartikel mit der Streurichtung GN für Grenzstreuen bei Normaldüngung abgeschleudert werden.

Soll der Schleuderstreuer für das Bestreuen von Feldrandstreifen bei der Spätdüngung gemäß Fig.4 eingesetzt werden, so wird auf der Schleuderscheibe 5 - bei einem Zweischeibenstreuer nur an der dem Feldrand 9 zugewandten Schleuderscheibe - die in Fig. 9 dargestellten Wurfelemente 23 mittels der Schraube 19 auf der Schleuderscheibe montiert. Diese Wurfelemente 23 weisen jeweils die untere und obere Führungsfläche 11 bzw. 12 auf, an die sich die untere Leitfläche 24 und die obere Leitfläche 25 derart anschließen, daß die erstere im Winkel zur unteren Führungsfläche 11 nach oben und die letztere im Winkel zur unteren Führungsfläche 11 nach unten weisend angeordnet sind. Die Düngemittelpartikel werden auf diese Weise im durchmischten, verdichteten und vergleichmäßigten Düngemittelstrom in Streurichtung GS für Grenzstreuung bei Spätdüngung abgeschleudert, so daß das in Fig.4 gezeigte Streubild D mit gleichbleibender Streustärke ST entsteht.

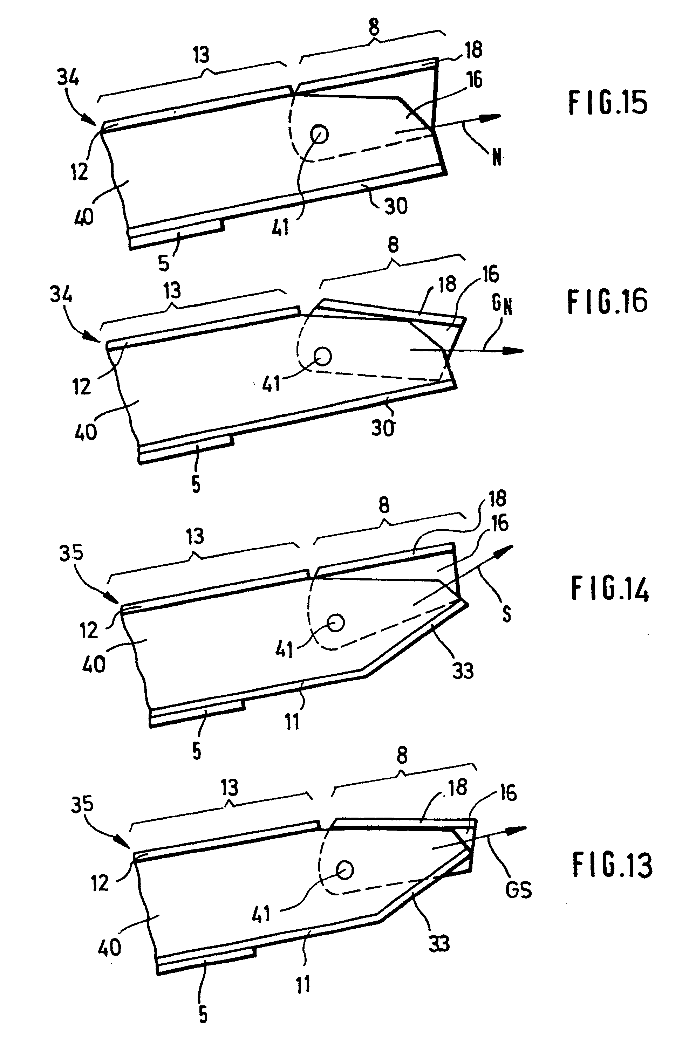

In den Figuren 13 bis 16 sind teil-verstellbare Wurfelemente 34 und 35 dargestellt, bei denen jeweils die untere Leitfläche des äußeren Abwurfteils 8 und der innere Führungsteil 13 als einteiliges Bauelement ausgebildet sind,bei dem der Steg 40 von der oberen Führungsfläche 12 aus in abgeschrägten Stufen bis zum freien Ende der unteren Leitfläche verläuft. Ein oberer Stegteil 16, der die obere Leitfläche 18 trägt und im wesentlichen dem in den Figuren 5 bis 8 dargestellten oberen Stegteil 16 entspricht, weist eine Bohrung auf und ist mit dieser auf einen am Steg 40 angebrachten Schwenkbolzen 41 aufgeschoben und dadurch in gleicher Weise, wie der obere Stegteil 16 in den Figuren 5 bis 8, am inneren Führungsteil 13 in aufrechter Ebene schwenkbar angeordnet.

Die Wurfelemente 34 und 35 unterscheiden sich durch die Ausbildung des unteren U-Schenkels voneinander. Das Wurfelement 34 ist für die Normaldüngung einschließlich des Grenzstreuens vorgesehen und weist dementsprechend den unteren U-Schenkel gemäß den Figuren 10 und 12 auf. Im Gegensatz dazu ist das Wurfelement 35 für die Spätdüngung einschließlich des Grenzstreuens vorgesehen und dementsprechend mit einer unteren Führungsfläche 11 und einer sich daran anschließenden, nach oben in den Düngemittelstrom hineinragenden unteren Leitfläche 33 gemäß der Figur 11 ausgerüstet. Beide Wurfelemente 34, 35 sind entweder leicht austauschbar an der Schleuderscheibe 5 oder zusammen mit dieser austauschbar am Schleuderstreuer 1 befestigt.

Beim Einsatz des Schleuderstreuers für Normaldüngung wird das Wurfelement 34 nach den Figuren 15 und 16 verwendet. Dabei ist der obere Stegteil 16 soweit nach oben verschwenkt, bis er, ähnlich wie der obere Stegteil nach Fig.6, am freien Ende der oberen Führungsfläche 12 anliegt und dieser Stellung nach Fig.15 parallel zum unteren U-Schenkel und fluchtend mit der oberen Führungsfläche 12 verläuft. Dementsprechend werden die Düngemittelpartikel in Streurichtung N für Normaldüngung abgeschleudert. Zur Umstellung des Schleuderstreuers auf Grenzstreuen bei Normaldüngung ist es lediglich erforderlich, den oberen Stegteil 16 soweit nach unten zu verschwenken, bis er mit seiner oberen Leitfläche 18 in den Düngemittelstrom hineinragend an einer Schrägstufe des Steges 40, wie in Fig.16 gezeigt, anliegt. Die Düngemittelpartikel werden in der Streurichtung GN abgeschleudert.

Zur Umstellung des Schleuderstreuers auf Spätdüngung wird das Wurfelement 34 gegen das Wurfelement 35 nach den Fig.13 und 14 ausgetauscht und der obere Stegteil 16 in die in Fig.14 gezeigte Stellung, die seiner Stellung nach Fig.15 entspricht, gebracht. Die untere Leitfläche 33 ragt ebenso wie die untere Leitfläche 17 in Fig.7 und 33 in Fig.11 mit einer größeren Steigung gegenüber der Horizontalen als die untere Führungsfläche 11 derart in den Düngemittelstrom hinein, daß die Düngemittelpartikel in Streurichtung S für Spätdüngung abgeschleudert werden. Soll der Schleuderstreuer auf Grenzstreuen bei Spätdüngung umgestellt werden, ist es lediglich erforderlich, den oberen Stegteil 16 soweit nach unten zu verschwenken, bis er mit seiner oberen Leitfläche 18 in den Düngemittelstrom hineinragend an einer Schrägstufe des Steges 40, wie in Fig. 13 gezeigt, anliegt. Die untere Leitfläche 33 ist dabei im Winkel zur unteren Führungsfläche 11 nach oben und die obere Leitfläche 18 im Winkel zur unteren Führungsfläche 11 nach unten weisend derart angeordnet, daß die Düngemittelpartikel in durchmischten, verdichteten und vergleichmäßigten Düngemittelstrom in Streurichtung GS für Grenzstreuung bei Spätdüngung abgeschleudert werden und das in Fig.4 gezeigte Streubild D mit gleichbleibender Streustärke ST entsteht.

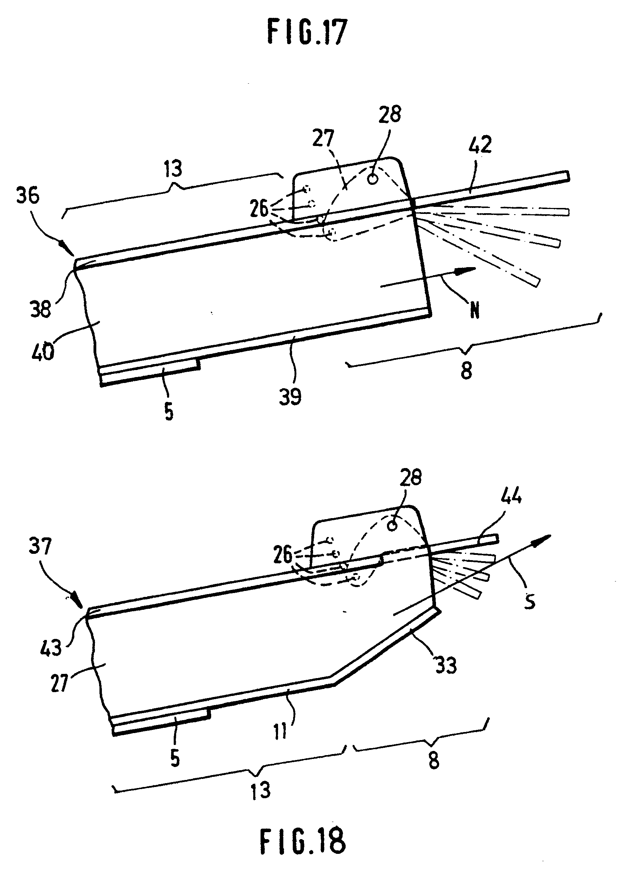

Das in Fig. 17 dargestellte, teil-verstellbare Wurfelement 36 entspricht in seinem grundsätzlichen Aufbau dem Wurfelement 20 nach Fig.10, weist allerdings eine Verlängerung des oberen U-Schenkels 38 auf, die hier als obere Leitfläche 42 bezeichnet und um einen Schwenkbolzen 28 in aufrechter Ebene schwenkbar befestigt ist. Die obere Leitfläche 42 ist mit einem Ansatz 27 versehen, über den sie mittels Rasten 26 in verschiedene Positionen, wie sie mit strichpunktierten Linien angedeutet sind, gebracht werden kann. Wenn die Leitfläche 42 sich in der mit durchgezogenen Linien dargestellten Position befindet, werden die Düngemittelpartikel in Streurichtung N für das Normaldüngen abgestreut. Sollen nur Feldrandstreifen bestreut werden, so wird die obere Leitfläche 42 in eine der mit strichpunktierten Linien dargestellten Position geschwenkt. Hierbei sind verschiedene Positionen vorgesehen, um so für verschieden breite Streifen bis zum Feldrand, die noch bestreut werden müssen, die Wurfweite so einstellen zu können, daß die Düngemittelpartikel in der Weise bis an den Feldrand 9 und nicht über diesen hinausgeworfen werden, so daß das Streubild C ergibt. Hierbei kann es dann unter Umständen erforderlich sein, wenn die Wurfweite bis zum Feldrand eine andere Größe aufweisen muß als die Wurfweite auf der dem Feldinneren zugekehrten Seite, um so eine Überlappung des Streubildes mit dem vorhergehenden Streuband zu erreichen, daß die Düngemittelmenge, die den beiden Schleuderscheiben zugeführt wird, unterschiedlich groß eingestellt werden muß.

Fig.18 zeigt ein Wurfelement 37, das prinzipiell wie das Wurfelement 36 nach Fig.17 aufgebaut ist, allerdings mit dem Unterschied, daß zum einen der obere U-Schenkel 43 sowie die obere Leitfläche 44 kürzer als die entsprechenden Bauteile 38 bzw. 42 nach Fig.17 ausgebildet sind und der untere U-Schenkel in die untere Führungsfläche 11 und die untere Leitfläche 33, wie in Fig. 13, aufgeteilt ist. Auch hier kann, wie in Fig.17, die obere Leitfläche 44 von der mit durchgezogener Linie dargestellten Position in verschiedene, mit gestrichelten Linien angedeutete Positionen in den Düngemittelstrom hinein verschwenkt werden, um so das Wurfelement 37 von der Spätdüngung (obere Leitfläche 44 in durchgezogener Position) auf die Spätdüngung mit Grenzstreuung (oberes Leitelement 44 in einer der mit gestrichelten Linien dargestellten Position) ähnlich wie das Wurfelement 36 nach Fig.17 umstellen zu können. Dabei ist ebenfalls eine Anpassung des Wurfelementes an verschiedene Einsatzbedingungen ähnlich wie bei dem Wurfelement 6 möglich.

**Patentansprüche**

1. Verfahren zum Verteilen von Düngemitteln mittels eines Schleuderstreuers, bei welchem die Düngemittelpartikel, durch die Zentrifugalkraft beschleunigt, als Düngemittelstrom entlang einem sich drehenden Wurfelement mit einer der Streurichtung bei "Normaldüngung" entsprechenden Steigung gegenüber der Horizontalen nach außen bewegt und über einen äußeren Abwurfbereich des wurfelementes nach außen abgeschleudert und Wurfprabeln beschreibend über der zu bestreuenden Streufläche gleichmäßig verteilt werden,
   dadurch **gekennzeichnet**,
   daß der Düngemittelstrom zur Durchführung des Grenzstreuens bei Spätdüngung im äußeren Abwurfbereich (8) von dem Wurfelement zunächst mit einer gegenüber der Streurichtung bei "Normaldüngung" (N) größeren Steigung und anschließend von dem Wurfelement zumindest teilweise wieder gegenüber dem nach oben abgelenkten Düngemittelstrom nach unten abgelenkt.

2. Verfahren nach Anspruch 1,
   dadurch **gekennzeichnet**,
   daß ein oberer Teil des nach oben abgelenkten Düngemittelstroms nach unten abgelenkt wird.

3. Schleuderstreuer zum Verteilen von Düngemitteln zur Durchführung des Verfahrens nach den vorhergehenden Ansprüchen, mit wenigstens einer entlang einer Kreisbahn antreibbaren Schleuderscheibe, die mit wenigstens einem mitdrehenden Wurfelement zum Abschleudern des Düngemittels nach außen versehen ist, welches ein inneres Führungsteil mit einer unteren Führungsfläche und ein äußeres Abwurfteil mit einer unteren und einer oberen Leitfläche umfaßt, wobei die untere führungsfläche mit einer der Streurichtung bei "Normaldüngung" entsprechenden Steigung gegenüber der Horizontalen verläuft, die untere Leitfläche bei Durchführung der Normaldüngung in Verlängerung der unteren Führungsfläche im wesentlichen gleichwinkelig mit dieser und bei Durchführung der Spätdüngung mit einem Winkel zur unteren Führungsfläche nach oben weisend sowie die obere Leitfläche bei Durchführung beider Düngungsarten im wesentlichen parallel zur unteren Leitfläche angeordnet sind,
   dadurch **gekennzeichnet,**
   daß die untere Leitfläche (17, 24, 33) des mitdrehenden Wurfelementes im Winkel zur unteren Führungsfläche (11) nach oben und die obere Leitfläche (18, 25, 44) im Winkel zur unteren Führungsfläche (11) nach unten weisend angeordnet sind.

4. Schleuderstreuer nach Anspruch 3,
   dadurch **gekennzeichnet,**
   daß die obere Leitfläche (42, 44) über die untere Leitfläche (33) nach außen vorstehend angeordnet ist.

5. Schleuderstreuer nach Anspruch 3 oder 4,
   dadurch **gekennzeichnet,**
   daß der innere Führungsteil (13) eine zur unteren Führungsfläche (11) im wesentlichen parallele obere Führungsfläche (12) aufweist.

6. Schleuderstreuer nach wenigstens einem der Ansprüche 3 bis 5,
   dadurch **gekennzeichnet,**
   daß das Wurfelement (6, 23, 35, 37) lösbar und gegen andere, für andere Düngungs- und Streuarten ausgebildete Wurfelemente (20, 21, 22, 34, 36) austauschbar am Schleuderstreuer (1) befestigt ist.

7. Schleuderstreuer nach wenigstens einem der Ansprüche 3 bis 6,
   dadurch **gekennzeichnet,**
   daß die Streueinrichtung (4) als wenigstens eine drehbare Schleuderscheibe (5) mit darauf angeordnetem Wurfelement (6, 20 bis 23, 34 bis 37) ausgebildet ist.

8. Schleuderstreuer nach Anspruch 7,
   dadurch **gekennzeichnet,**
   daß die Schleuderscheibe (5) lösbar und austauschbar am Schleuderstreuer (1) befestigt ist.

9. Schleuderstreuer nach Anspruch 7 oder 8,
   dadurch **gekennzeichnet,**
   daß jedes Wurfelement (6, 20 bis 23, 34 bis 37) lösbar und austauschbar an der Schleuderscheibe (5) befestigt ist.

10. Schleuderstreuer nach wenigstens einem der Ansprüche 3 bis 9,
    dadurch **gekennzeichnet,**
    daß jedes Wurfelement (20 - 23) mit seinem inneren Führungsteil (13) und seinem äußeren Abwurfteil (8) insgesamt einstückig ausgebildet ist (Figur 9 bis 12).

11. Schleuderstreuer nach wenigstens einem der Ansprüche 3 bis 9,
    dadurch **gekennzeichnet,**
    daß der innere Führungsteil (13) und der äußere Abwurfteil (8) jedes Wurfelementes (6) zwei individuelle Bauteile sind (Figur 5 bis 8).

12. Schleuderstreuer nach Anspruch 11,
    dadurch **gekennzeichnet,**
    daß der äußere Abwurfteil lösbar und gegen andere, für andere Düngungs- und Streuarten ausgebildete Abwurfteile austauschbar am inneren Führungssteil (13) befestigt ist.

13. Schleuderstreuer nach Anspruch 11,
    dadurch **gekennzeichnet,**
    daß der äußere Abwurfteil lösbar und gegen andere, für andere Düngungs- und Streuarten ausgebildete Abwurfteile austauschbar an der Schleuderscheibe (5) befestigt ist.

14. Schleuderstreuer nach wenigstens einem der Ansprüche 11 bis 13,
    dadurch **gekennzeichnet,**
    daß die untere Leitfläche (11) und/oder die obere Leitfläche (12) unabhängig voneinander in unterschiedliche Winkelstellungen gegenüber dem inneren Führungsteil (13) verstellbar sind (Figur 5 bis 8).

15. Schleuderstreuer nach Anspruch 14,
    dadurch **gekennzeichnet,**
    daß die untere und die obere Leitfläche (11, 12) auf einem gemeinsamen Schwenkbolzen (14) angeordnet sind (Figur 5 bis 8).

16. Schleuderstreuer nach Anspruch 14,
dadurch **gekennzeichnet,**
daß die untere und die obere Leitfläche (11, 12) jeweils auf getrennten Schwenkbolzen angeordnet sind.

17. Schleuderstreuer nach wenigstens einem der Ansprüche 3 bis 9,
dadurch **gekennzeichnet,**
daß die untere Leitfläche (30, 33) des äußeren Abwurfteils (8) und der innere Führungsteil (13) als einteiliges Bauelement ausgebildet sind und die obere Leitfläche (18) in unterschiedliche Winkelstellungen gegenüber der unteren Leitfläche (30, 33) verstellbar ist (Figur 13 bis 18).

18. Schleuderstreuer nach wenigstens einem der Ansprüche 3 bis 9,
dadurch **gekennzeichnet,**
daß die obere Leitfläche des äußeren Abwurfteils (8) und der innere Führungsteil (13) als einteiliges Bauelement ausgebildet sind und die untere Leitfläche in unterschiedliche Winkelstellungen gegenüber der oberen Leitfläche verstellbar ist.

19. Schleuderstreuer nach Anspruch 17 oder 18,
dadurch **gekennzeichnet,**
daß die obere Leitfläche (18, 42, 47) und/oder die untere Leitfläche verstellbar an dem einteiligen Bauelement befestigt sind.

20. Schleuderstreuer nach Anspruch 17 oder 18,
dadurch **gekennzeichnet,**
daß die obere Leitfläche und/oder die untere Leitfläche verstellbar an der Schleuderscheibe (5) befestigt ist.

21. Schleuderstreuer nach wenigstens einem der Ansprüche 3 bis 18,
dadurch **gekennzeichnet,**
daß die Streueinrichtung (4, 5) zumindest ein längeres und ein kürzeres Wurfelement umfaßt und die untere und/oder obere Leitfläche des längeren Wurfelementes bzw. dessen Abwurfteil insgesamt verstellbar bzw. austauschbar ausgebildet sind bzw. ist.

22. Schleuderstreuer nach wenigstens einem der Ansprüche 14 bis 21,
dadurch **gekennzeichnet,**
daß Rasten (26) oder Anschläge zur Festlegung der unteren Leitfläche und/oder oberen Leitfläche (42, 43) in verschiedenen Winkelstellungen vorgesehen sind.

23. Schleuderstreuer nach wenigstens einem der Ansprüche 3 bis 19,
dadurch **gekennzeichnet,**
daß wenigstens zwei Streueinrichtungen (4, 5) vorgesehen und die diesen jeweils zuzuführende Düngemittelmenge unabhängig voneinander veränderbar ist.

**Claims**

1. Method of distributing fertilizers by means of a centrifugal spreader, wherein the fertilizer particles, accelerated by the centrifugal force, are moved outwardly as a stream of fertilizer along a rotating throwing means with an incline corresponding to the direction of spreading during "normal fertilizing" relative to the horizontal and are centrifuged outwardly over an outer discharge part of the throwing means and are uniformly distributed over the area to be spread so as to describe the throwing parabola, characterised in that, to effect the limited spreading during late fertilizing, the stream of fertilizer in the outer discharge part (8) is initially deflected from the throwing means at an incline which is greater than the direction of spreading during "normal fertilizing" (N), and it is subsequently deflected downwardly from the throwing means, at least partially again, relative to the upwardly deflected stream of fertilizer.

2. Method according to claim 1, characterised in that an upper portion of the upwardly deflected stream of fertilizer is deflected downwardly.

3. Centrifugal spreader for distributing fertilizers for the accomplishment of the method according to the preceding claims, including at least one centrifugal disc, which is drivable along a circular path and is provided with at least one co-rotating throwing means for centrifuging the fertilizer outwardly, said throwing means including an inner conducting part with a lower conducting surface and an outer discharge part with a lower guide surface and an upper guide surface, the lower conducting surface extending at an incline corresponding to the direction of spreading during "normal fertilizing" relative to the horizontal, and the lower guide surface points upwardly during the accomplishment of normal fertilizing as an extension of the lower conducting surface substantially equiangularly therewith and, during accomplishment of the late fertilizing, at an angle relative to the lower conducting surface, and the upper guide surface is disposed substantially parallel to the lower conducting surface during the accomplishment of both types of fertilizing, characterised in that the lower guide surface (17, 24, 33) of the co-rotating throwing means is disposed so as to point upwardly at an angle relative to the lower conducting surface (11), and the upper guide surface (18, 25, 44) is disposed so us to point downwardly at an angle relative to the lower conducting surface (11).

4. Centrifugal spreader according to claim 3, characterised in that the upper guide surface (42, 44) is disposed so as to protrude outwardly beyond the lower guide surface (33).

5. Centrifugal spreader according to claim 3 or 4, characterised in that the inner conducting part (13) includes an upper conducting surface (12), which extends substantially parallel to the lower conducting surface (11).

6. Centrifugal spreader according to at least one of claims 3 to 5, characterised in that the throwing means (6, 23, 35, 37) is secured to the centrifugal spreader (1) so as to be detachable and exchangeable with other throwing means (20, 21, 22, 34, 36) which are designed for other types of fertilizing and spreading.

7. Centrifugal spreader according to at least one of claims 3 to 6, characterised in that the spreading arrangement (4) is designed to be at least one rotatable centrifugal disc (5) with a throwing means (6, 20 to 23, 34 to 37) disposed thereon.

8. Centrifigual spreader according to claim 7, characterised in that the centrifugal disc (5) is secured to the centrifugal spreader (1) so as to be detachable and replaceable.

9. Centrifugal spreader according to claim 7 or 8, characterised in that each throwing means (6, 20 to 23, 34 to 37) is secured to the centrifugal disc (5) so as to be detachable and replaceable.

10. Centrifugal spreader according to at least one of claims 3 to 9, characterised in that each throwing means (20 - 23) is generally a one-piece construction with its inner conducting part (13) and its outer discharge part (8) (Figures 9 to 12).

11. Centrifugal spreader according to at least one of claims 3 to 9, characterised in that the inner conducting part (13) and the outer discharge part (8) of each throwing means (6) are two individual component parts (Figures 5 to 8).

12. Centrifugal spreader according to claim 11, characterised in that the outer discharge part is secured to the inner conducting part (13) so as to be detachable and replaceable with other discharge parts which are designed for other types of fertilizing and spreading.

13. Centrifugal spreader according to claim 11, characterised in that the outer discharge part is secured to the centrifugal disc (5) so as to be detachable and replaceable with other discharge parts designed for other types of fertilizing and spreading.

14. Centrifugal spreader according to at least one of claims 11 to 13, characterised in that the lower guide surface (11) and/or the upper guide surface (12) are adjustable independently of each other into different angular positions relative to the inner conducting part (13) (Figures 5 to 8).

15. Centrifugal spreader according to claim 14, characterised in that the lower and upper guide surfaces (11, 12) are disposed on a common pivot pin (14) (Figures 5 to 8).

16. Centrifugal spreader according to claim 14, characterised in that the lower and upper guide surfaces (11, 12) are each disposed on separate pivot pins.

17. Centrifugal spreader according to at least one of claims 3 to 9, characterised in that the lower guide surface (30, 33) of the outer discharge part (8) and the inner conducting part (13) are designed as a one-piece component part, and the upper guide surface (18) is adjustable into different angular positions relative to the lower guide surface (30, 33) (Figures 13 to 18).

18. Centrifugal spreader according to at least one of claims 3 to 9, characterised in that the upper guide surface of the outer discharge part (8) and the inner conducting part (13) are designed as a one-piece component part, and the lower guide surface is adjustable into different angular positions relative to the upper guide surface.

19. Centrifugal spreader according to claim 17 or 18, characterised in that the upper guide surface (18, 42, 47) and/or the lower guide surface are adjustably secured to the one-piece component part.

20. Centrifugal spreader according to claim 17 or 18, characterised in that the upper guide surface and/or the lower guide surface are adjustably secured to the centrifugal disc (5).

21. Centrifugal spreader according to at least one of claims 3 to 18, characterised in that the spreading arrangement (4, 5) includes at least a longer throwing means and a shorter throwing means, and the lower and/or upper guide surface of the longer throwing means, or its discharge part, are designed to be generally adjustable or replaceable.

22. Centrifugal spreader according to at least one of claims 14 to 21, characterised in that locking means (26) or stop parts are provided to secure the lower guide surface and/or upper guide surface (42, 43) in various angular positions.

23. Centrifugal spreader according to at least one of claims 3 to 19, characterised in that at least two spreading arrangements are provided, and the amount of fertilizer to be supplied to each arrangement is variable independently of each other.

**Revendications**

1. Procédé de distribution d'engrais à l'aide d'un épandeur centrifuge, procédé selon lequel les particules d'engrais sont accélérées par la force centrifuge et sont dirigées comme un flux d'engrais le long d'un élément éjecteur en rotation, suivant une pente par rapport à la direction horizontale, correspondant à la direction d'épandage "normale" en étant éjectées par une zone d'éjection extérieure de l'élément éjecteur et être réparties régulièrement suivant des paraboles d'éjection décrivant la surface d'épandage à traiter, procédé caractérisé en ce que pour effectuer un épandage limite dans le cas de l'épandage de couverture, dans la zone d'éjection extérieure (8) de l'élément éjecteur, le flux d'engrais est tout d'abord dévié vers le haut avec une pente supérieure à la direction d'épandage correspondant à l'épandage normal (N), puis ce flux d'engrais dirigé vers le haut est au moins partiellement de nouveau dévié vers le bas par l'élément éjecteur.

2. Procédé selon la revendication 1, caractérisé en ce qu'on dévie vers le bas la partie supérieure du flux d'engrais dévié vers le haut.

3. Distributeur centrifuge pour distribuer de l'engrais, pour la mise en oeuvre du procédé selon les revendications précédentes, dispositif comprenant au moins un disque d'épandage entraîné suivant une trajectoire circulaire, disque équipé d'au moins un élément éjecteur solidaire en rotation pour éjecter l'engrais, élément qui comprend une partie intérieure de guidage et une surface inférieure de guidage ainsi qu'une partie extérieure d'éjection avec une surface directrice inférieure et une surface directrice supérieure, la surface de guidage inférieure ayant une pente correspondant à la direction d'épandage normal, la surface directrice inférieure ayant pratiquement la même inclinaison pour l'épandage normal, dans le prolongement de la surface de guidage inférieure et cette surface directrice faisant un angle vers le haut par rapport à la surface de guidage inférieure dans le cas de l'épandage de couverture et pour effectuer les deux types d'épandage, la surface directrice supérieure est essentiellement parallèle à la surface directrice inférieure, dispositif caractérisé en ce que la surface directrice inférieure (17, 24, 33) de l'élément éjecteur, en rotation, fait un angle vers le haut par rapport à la surface inférieure de guidage (11) et les surfaces directrices supérieures (18, 25, 44) font un angle dirigé vers le bas par rapport à la surface inférieure de guidage (11).

4. Distributeur d'engrais selon la revendication 3, caractérisé en ce que la surface-directrice supérieure (42, 44) dépasse vers l'extérieur, la surface directrice inférieure (33).

5. Distributeur centrifuge selon la revendication 3 ou 4, caractérisé en ce que la partie intérieure de guidage (13) comporte une surface de guidage supérieure (12) pratiquement parallèle à la surface de guidage inférieure (11).

6. Distributeur centrifuge selon au moins l'une des revendications 3 à 5, caractérisé en ce que l'élément éjecteur (6, 23, 35, 37) est fixé de manière amovible sur le disque d'épandage (1) et peut être remplacé par d'autres éléments éjecteurs (20, 21, 22, 34, 36) prévus pour d'autres types d'engrais ou d'autres types d'épandage.

7. Distributeur centrifuge selon au moins l'une des revendications 3 à 6, caractérisé en ce que le dispositif d'épandage (4) comprend au moins un disque d'épandage (5) rotatif sur lequel est fixé un élément éjecteur (6, 20-23, 34-37).

8. Distributeur centrifuge selon la revendication 7, caractérisé en ce que le disque d'épandage (5) est fixé de manière amovible et interchangeable sur l'épandeur centrifuge (1).

9. Distributeur centrifuge selon la revendication 7 ou 8, caractérisé en ce que chaque élément éjecteur (6, 20-23, 34-37) est fixé de manière amovible et interchangeable sur le disque d'épandage (5).

10. Distributeur centrifuge selon au moins l'une des revendications 3 à 9, caractérisé en ce que chaque élément éjecteur (20-23) fait une seule pièce avec sa partie intérieure de guidage (13) et sa partie extérieure d'éjection (8) (figures 9 - 12).

11. Distributeur centrifuge selon au moins l'une des revendications 3 à 9, caractérisé en ce que la partie intérieure de guidage (13) et la partie extérieure d'éjection (8) de chaque élément-éjecteur (6) sont deux pièces distinctes (figures 5 - 8).

12. Distributeur centrifuge selon la revendication 11, caractérisé en ce que la partie extérieure d'éjection est fixée de manière amovible et interchangeable avec d'autres parties d'éjection conçues pour d'autres types d'engrais ou d'épandage sur la partie intérieure de guidage (13).

13. Distributeur centrifuge selon la revendication 11, caractérisé en ce que la partie extérieure d'éjection est fixée de manière amovible et interchangeable avec d'autres parties d'éjection convenant pour d'autres types d'engrais ou d'épandage sur le disque d'épandage (5).

14. Distributeur centrifuge selon au moins l'une des revendications 11 à 13, caractérisé en ce que la surface directrice inférieure (11) et/ou la surface directrice supérieure (12) sont réglables par rapport à la partie intérieure de guidage (12) avec des positions angulaires différentes (figures 5 - 8).

15. Distributeur centrifuge selon la revendication 14, caractérisé en ce que la surface directrice inférieure et la surface directrice supérieure (11, 12) sont portées par un axe de pivotement commun (14 (figures 5 - 8).

16. Distributeur centrifuge selon la revendication 14, caractérisé en ce que la surface directrice inférieure et la surface directrice supérieure (11, 12) sont montées sur des axes de pivotement distincts.

17. Distributeur centrifuge selon au moins l'une des revendications 3 à 9, caractérisé en ce que la surface directrice inférieure (30, 33) de la partie extérieure d'éjection (8) et la surface intérieure de guidage (13) constituent une seule pièce et la surface directrice supérieure (18) peut être réglée dans des positions angulaires différentes par rapport à la surface directrice inférieure (30, 33) (figures 13 - 18).

18. Distributeur centrifuge selon au moins l'une des revendications 3 à 9, caractérisé en ce que la surface directrice supérieure de la partie extérieure d'éjection (8) et de la partie inférieure de guidage (13) est constituée par une seule pièce et la surface directrice inférieure peut être réglée dans des positions angulaires différentes par rapport à la surface directrice supérieure.

19. Distributeur centrifuge selon les revendications 17 ou 18, caractérisé en ce que la surface directrice supérieure (18, 42, 47) et/ou la surface directrice inférieure sont fixées de manière réglable sur la pièce en une partie.

20. Distributeur centrifuge selon les revendications 17 ou 18, caractérisé en ce que la surface directrice supérieure et/ou la surface directrice inférieure sont fixées de manière réglable sur le disque d'épandage (5).

21. Distributeur centrifuge selon au moins l'une des revendications 3 à 18, caractérisé en ce que le dispositif d'épandage (4, 5) comprend au moins un élément éjecteur long et un élément éjecteur court et la surface directrice inférieure et/ou supérieure de l'élément éjecteur long ou sa partie d'éjection sont globalement réglables ou interchangeables.

22. Distributeur centrifuge selon au moins l'une des revendications 14 à 21, caractérisé en ce que des encoches (26) ou des butées pour fixer la surface directrice inférieure et/ou la surface directrice supérieure (42, 43) sont prévues pour différentes positions angulaires.

23. Distributeur centrifuge selon au moins l'une des revendications 3 à 19, caractérisé par au moins deux dispositifs d'épandage (4, 5) et les quantités d'engrais qui les alimentent sont variables indépendamment.

FIG.1

FIG.2

EP 0 213 370 B1

FIG.3

FIG.4

EP 0 213 370 B1

FIG.6

FIG.7

FIG.8

FIG.5

FIG.10

FIG.11

FIG.12

FIG.9

FIG.15

FIG.16

FIG.14

FIG.13

# FIG.17

# FIG.18